# EUROPÄISCHE PATENTSCHRIFT

(11) **EP 4 177 496 B1**
(45) Veröffentlichungstag und Bekanntmachung des Hinweises auf die Patenterteilung: **20.08.2025**
(21) Anmeldenummer: 22203725.1
(22) Anmeldetag: 26.10.2022
(51) Int. Cl.: F16H 63/18, F16H 63/32

(54) **SCHALTWALZE**
SWITCHING ROLLER
ROULEAU DE COMMUTATION

(30) Priorität: 05.11.2021 DE 102021128917
(43) Veröffentlichungstag der Anmeldung: 10.05.2023
(73) Patentinhaber: Doubleeagle Industry (China) Limited, Wanchai, Hong Kong (HK)
(72) Erfinder: Puotkalis, Martynas, V.Grybo 23-15, 10318 Vilnius (LT)
(74) Vertreter: von Bülow & Tamada

(56) Entgegenhaltungen:
- CN-A- 106 609 842
- DE-T2- 68 910 468
- DE-U1- 8 912 348
- JP-A- 2012 072 829
- US-A- 2 577 019

## Beschreibung

Die vorliegende Erfindung betrifft eine Vorrichtung zur axialen Bewegung eines Getriebeelementes gemäß dem Oberbegriff des Anspruchs 1.

Die DE 89 12 348 U1, die US 4 782 782 A und die DE 689 10 468 T2 offenbaren je eine Vorrichtung gemäß dem Oberbegriff des geltenden Anspruchs 1. Auch aus der US 6 370 976 B1 ist eine gattungsgemäße Vorrichtung bekannt.

Aufgabe der Erfindung ist, die bekannte Vorrichtung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst eine Vorrichtung zur axialen Bewegung eines Getriebeelementes eine drehbar um eine Rotationsachse gelagerte Schaltwalze mit einer umfänglich um die Rotationsachse in ihren Außenmantel eingeformte Schaltnut, die wenigstens bereichsweise axial geneigt ist, einen die Schaltwalze haltenden Käfig mit einer einen Käfiginnenraum gegen einen Käfigaußenraum abgrenzenden Käfigwand und einem axial durch die Käfigwand verlaufenden Wandschlitz, welcher den Käfiginnenraum zum Käfigaußenraum hin öffnet, einen zwischen der Schaltwalze und der Käfigwand im Bereich des Wandschlitzes axial beweglich gehaltenen Schlitten, und eine Schaltgabel mit zwei Gabelbeinen, zwischen denen das Getriebeelement zur axialen Bewegung in axialer Richtung formschlüssig aufnehmbar ist und einem sich an die Gabelbeine anschließenden Führungsdorn, der durch den Wandschlitz und den Schlitten geführt in die Schaltnut eingesetzt ist. Erfindungsgemäß ist die Schaltnut mit einer geschlossenen Kurve in die Schaltwalze eingeformt.

Der Vorrichtung liegt die Überlegung zugrunde, dass sich die Schaltgabel in anderen Richtungen als der axialen Richtung möglichst spielfrei bewegen sollte. Hierzu sind die Schaltgabeln in der eingangs genannten Vorrichtung über Führungshülsen auf Wellen gelagert, welche in der axialen Richtung bauraumeinnehmend ausgestaltet sind.

Die angegebene Vorrichtung geht hier einen anderen Weg und lagert die Schaltgabel nicht auf einer eigenen Welle sondern führt sie zwischen der der Schaltwalze selbst und einem Käfig, in dem die Schaltwalze gehalten ist. Auf diese Weise kann die angegebene Vorrichtung sehr bauraumsparend ausgeführt werden, selbst wenn die Schaltwalze eine größere Anzahl an Schaltgabeln von beispielsweise drei oder vier führt.

In einer Weiterbildung der angegebenen Vorrichtung ist die Schaltnut elliptisch in die Schaltwalze eingeformt. Auf diese Weise ist eine Endlosschleife für die Schaltnut geschaffen, über die sich alle Schaltzustände der angegebenen Vorrichtung durch Endlosdrehen der Schaltwalze einstellen lassen.

In einer anderen Weiterbildung der angegebenen Vorrichtung sind die axialen Enden der Schaltwalze durch den Käfig zum Käfigaußenraum geführt, wobei in wenigstens eines der axiales Enden in Umfangsrichtung um die Rotationsachse formschlüssig eine Antriebswelle zum Drehen der Schaltwalze einführbar ist. Auf diese Weise lassen sich durch einfaches Aufstecken von Achselementen Mittel zum Drehen der Schaltwalze konnektieren.

In einer besonderen Weiterbildung der angegebenen Vorrichtung ist die Schaltwalze im Bereich ihrer axialen Enden in und entgegen der axialen Richtung formschlüssig im Käfig gehalten. Auf diese Weise wird ein axiales Spiel der Schaltwalze minimiert, so dass sich die Schaltzustände der Vorrichtung präzise definieren lassen.

In einer noch anderen Weiterbildung der angegebenen Vorrichtung ist der Käfig aus wenigstens einem ersten Käfigteil und einem zweiten Käfigteil aufgebaut, die in axialer Richtung trennbar sind. Auf diese Weise lässt sich der Käfig in einfacher Weise als modulares System beispielsweise im Rahmen des Modellbaus konstruieren.

In einer zusätzlichen Weiterbildung der angegebenen Vorrichtung sind die beiden Käfigteile mittels eines in axialer Richtung wirkenden Käfigformschlusses miteinander verbunden. Auf diese Weise lassen sich die Käfigteile zerlegen und beispielsweise im Bereich des Modellbaus für alternative Modelle wiederverwenden.

In einer bevorzugten Weiterbildung der angegebenen Vorrichtung umfasst der Käfigformschluss Rasthaken. Auf diese Weise wird die zuvor genannte Zerlegbarkeit einerseits aber auch ein sicherer Zusammenhalt der beiden Käfigteile andererseits erreicht.

In einer weiteren Weiterbildung der angegebenen Vorrichtung ist der Schlitten mit einem in Umfangsrichtung um die Rotationsachse wirkenden Schlittenformschluss im Schlitz in der axialen Richtung geführt. Durch diesen Schlitz lässt sich sich die axiale Führungswirkung, also die Führung in der axialen Richtung und das Verhindern anderer Freiheitsgrade noch einmal steigern.

In einer noch weiteren Weiterbildung der angegebenen Vorrichtung weist der Schlitten an seiner zur Schaltwalze gerichteten Seite eine im Querschnitt kreissegmentförmige Aussparung auf, in die die Schaltwalze eingelegt ist. Diese kreissegmentförmige Aussparung verhindert Bewegungen des Schlittens quer zur zu führenden axialen Richtung und steigert die axiale Führungswirkung noch weiter.

In einer besonders bevorzugten Weiterbildung der angegebenen Vorrichtung ist der Schlitten an seinem in der axialen Richtung gesehenen linken und rechten Ende im Käfig in der axialen Richtung geführt gehalten. Auf diese Weise wird die axiale Führungswirkung noch weiter gesteigert.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine perspektivische Ansicht einer Vorrichtung, die mit vier Getriebeelementen in Eingriff steht,
Fig. 2 eine perspektivische Ansicht der Vorrichtung aus Fig. 1, die mit einem Getriebeelement in Eingriff steht,
Fig. 3 eine teilweise perspektivische Explosionsansicht der Vorrichtung aus Fig. 1, und
Fig. 4 eine vollständige perspektivische Explosionsansicht der Vorrichtung aus Fig. 1.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder. Die Beschreibung erfolgt in einem Raum, der durch eine Längsrichtung 2, eine Querrichtung 4 quer zur Längsrichtung 2 und eine Höhenrichtung 6 quer zur Längsrichtung 2 und quer zur Querrichtung 4 aufgespannt ist.

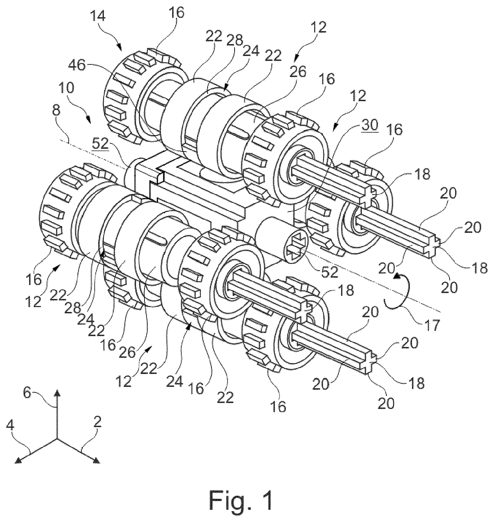

Es wird auf Fig. 1 Bezug genommen, die eine perspektivische Ansicht einer parallel zu einer Rotationsachse 8 ausgerichteten Vorrichtung 10 zeigt. Die Rotationsachse 8 verläuft dabei parallel zur Längsrichtung 2.

Die Vorrichtung 10 steht in Fig. 1 mit vier Getriebeelementen 12 eines nur in Teilen abgebildeten übergeordneten Getriebes in Form eines Zahnradgetriebes 14 in Eingriff.

Aufgabe eines Getriebes und somit auch des Zahnradgetriebes 14 ist es Bewegungsgrößen zu ändern. In der vorliegenden Ausführung erfolgt die Änderung der Bewegungsgrößen über Zahnräder 16, die in einer Umfangsrichtung 17 um die Rotationsachse 8 drehbar auf Wellen 18 gehalten sind. Die Wellen 18 besitzen in der Umfangsrichtung 17 wirkende Formschlusselemente 20, die in Fig. 1 der Übersichtlichkeit halber nicht an allen Wellen 18 mit einem eigenen Bezugszeichen versehen sind. Im Gegensatz zu den Zahnrädern 16 sind die Getriebeelemente 12 an diesen Formschlusselementen 20 formschlüssig gehalten, so dass sich die Getriebeelemente 12 zwar in der Längsrichtung 2 und damit in Richtung der Rotationsachse 8 bewegen, aber nicht in der Umfangsrichtung 17 drehen können.

Jedes Getriebeelement 12 ist aus zwei zur Rotationsachse 8 parallel angeordneten und axial beabstandet zueinander und konzentrisch zur jeweiligen Welle 18 gehaltenen Ringen 22 aufgebaut, so dass zwischen den Ringen 22 ein axialer Schlitz 24 gebildet ist. Die Ringe 22 jedes Getriebeelementes 12 sind auf Kuppelelementen 26 getragen, die konzentrisch innerhalb der Ringe 22 angeordnet und über Wände 28 mit den Ringen 22 befestigt sind. In jedem Getriebeelement 12 ist das jeweilige Kuppelelemente 26 formschlüssig mit den Formschlusselementen 20 der jeweiligen Welle 18 verbunden, so dass das Kuppelelemente 26 sich beim Drehen der jeweiligen Welle 18 mitdrehen. Werden die Getriebeelemente 12 auf den jeweiligen Wellen 18 in der Längsrichtung 2 hin- und herbewegt, lassen sie sich in die Zahnräder in der Umfangsrichtung 17 formschlüssig einkuppeln, so dass durch Drehen der jeweiligen Welle 18 nicht nur das Getriebeelement 12 sondern auch das eingekuppelte Zahnrad mitgedreht wird.

Der Aufbau und die Wirkungsweise der Getriebeelemente 12 ist grundsätzlich aus der WO 2019 / 137 993 A1 bekannt und soll daher nicht weiter vertieft werden.

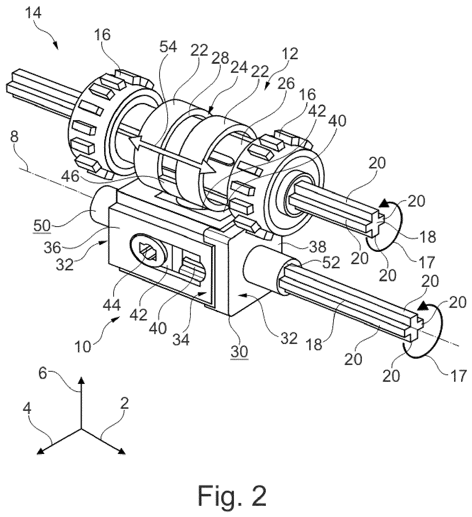

Zur weiteren Erläuterung der Vorrichtung 10 wird auf Fig. 2 Bezug genommen, die die Vorrichtung 10 in einer perspektivischen Ansicht mit einem einzelnen Getriebeelement in Eingriff stehend zeigt.

Die Vorrichtung 10 umfasst einen zylindrisch aufgebauten Käfig 30 mit im Wesentlichen quadratisch ausgebildeten Deckflächen 32 und einem die Deckflächen verbindenden Mantel 34. Die Deckflächen 32 sind rechtwinklig zur Rotationsachse 8 stehend angeordnet, wobei die Rotationsachse 8 zentrisch durch die Rotationsachse 8 verläuft. Der Käfig 30 ist aus einem ersten Käfigteil 36 und einem zweiten Käfigteil 38 gefertigt, wobei das zweite Käfigteil 38 als Deckel auf das erste Käfigteil 36 aufgesetzt wird. Auf die Verbindung zwischen den beiden Käfigteilen 36, 38 wird an späterer Stelle näher eingegangen.

Durch den Mantel 34 sind vier parallel zur Rotationsachse 8 verlaufende Schlitze 40 geformt, die in der Umfangsrichtung 17 gesehen zueinander 90° beabstandet sind. In der Perspektive der Fig. 2 sind von den vier Schlitzen 40 nur zwei zu sehen. In jedem Schlitz 40 ist je ein Schlitten 42 gehalten, der an die Form des jeweiligen Schlitzes 40 so angepasst ist, dass er in der Längsrichtung 2 geführt wird. Jeder Schlitten 42 besitzt eine zur Rotationsachse 8 hin gerichtete schlitzförmige Einstecköffnung 44, in die sich eine Gabel 46 einstecken lässt. In der Perspektive und der Konfiguration der Fig. 1 sind von den schlitzförmigen Einstecköffnungen 44 sowie von den einsteckbaren Gabeln 46 je nur eine zu sehen.

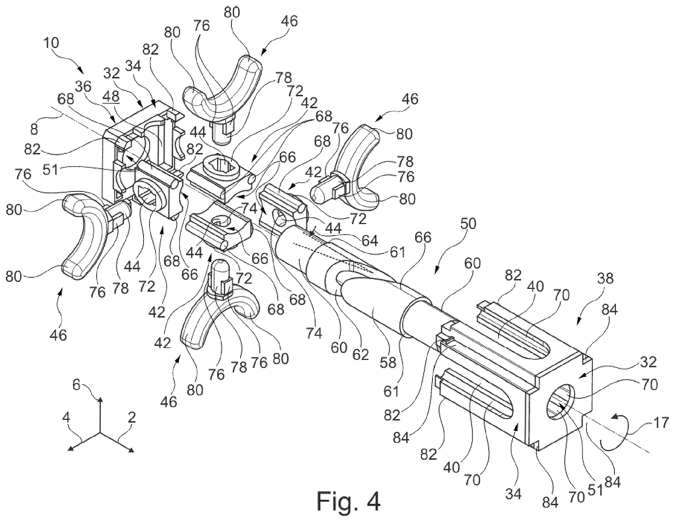

Die Deckflächen 32 und der Mantel 34 des Käfigs 30 umschließen einen später in Fig. 4 referenzierten Käfiginnenraum 48, in dem eine um die Rotationsachse 8 drehbare Schaltwalze 50 aufgenommen ist. Die Schaltwalze 50 ist durch in Fig. 4 zu sehende Schaltwalzenöffnungen 51 in den Deckflächen 32 des Käfigs 30 aus dem Käfigkinnenraum 48 herausgeführt und besitzt an beiden Stirnseiten je eine kreuzförmige Einstecköffnung 52, in die sich je eine Welle 18 einstecken lässt, wie sie bereits weiter oben beschrieben wurde. In der Perspektive der Fig. 2 ist von den kreuzförmigen Einstecköffnungen 52 nur eine zu sehen, wobei auch nur eine der kreuzförmigen Einstecköffnungen 52 eine Welle 18 eingesteckt ist. Auf weitere Konstruktionsdetails der Schaltwalze 50 wird an späterer Stelle im Detail eingegangen.

Die Schaltwalze 50 lässt sich über die in die kreuzförmigen Einstecköffnungen 52 einsteckbaren Wellen 18 in und entgegen der Umfangsrichtung 17 drehen. Aufgabe der Schaltwalze ist es, diese Drehbewegung in eine lineare Bewegung 54 der Schlitten 42 umzuwandeln, die mit der linearen Bewegung 54 die Gabeln 46 bewegen. Die Gabeln 46 wiederum sind in die axialen Schlitze 24 der Getriebeelemente 12 in der Längsrichtung 2 formschlüssig eingeschoben und können so die lineare Bewegung 54 auf die Getriebeelemente 12 übertragen. Auf diese Weise lässt sich das Zahnradgetriebe 14 in der weiter oben erläuterten Weise schalten.

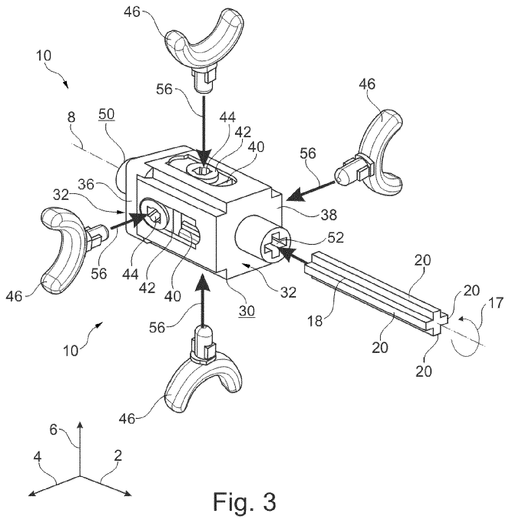

Die Vorrichtung 10 ermöglicht es, das Zahnradgetriebe 14 mit einer beliebigen Anzahl von Zahnrädern 16 zwischen eins und acht modular aufzubauen. Dies soll anhand Fig. 3 verdeutlicht werden, die eine teilweise perspektivische Explosionsansicht der Vorrichtung 10 aus Fig. 1 zeigt.

In jeder schlitzförmigen Einstecköffnung 44 lässt sich in einer entsprechenden zur Rotationsachse 8 gerichteten Einführrichtung 56 eine Gabel 46 aufnehmen, so dass die Vorrichtung 10 bis zu vier Gabeln 46 führt. Jede aufgenommene Gabel 46 kann dann wiederum in ein zuvor im Zusammenhang mit Fig. 2 beschriebenes Getriebeelement 12 eingreifen und so entweder ein Zahnrad 16 oder zwei Zahnräder 16 schalten, je nachdem, wie viele Zahnräder 16 auf der jeweiligen Welle 18 angeordnet werden. Somit lassen sich zwischen eins und acht Schaltstufen mit der Vorrichtung 10 in beliebiger Weise aufbauen.

Zur weiteren Erläuterung der Vorrichtung 10 wird auf Fig. 4 Bezug genommen, die eine vollständige perspektivische Explosionsansicht der Vorrichtung 10 zeigt.

Die Schaltwalze 50 ist das Herzstück der Vorrichtung 10. Sie besitzt einen rotationssymmetrisch um die Rotationsachse 8 gelegten Walzenkörper 58, an dessen Stirnseiten sich um die Rotationsachse 8 rotationssymmetrisch gelegte Schaltwalzenzapfen 60 anschließen. In die axialen Stirnseiten dieser Schaltwalzenzapfen 60, die dem Schaltwalzenkörper 58 gegenüberliegen, sind die Einstecköffnungen 52 eingeformt, die in der Perspektive der Fig. 4 nicht zu sehen sind. Die Schaltwalzenzapfen 60 besitzen einen kleineren Radius von der Rotationsachse 8 aus gesehen, als der Schaltwalzenkörper 58, so dass an den axialen Enden des Schaltwalzenkörpers 58 je eine axiale Schaltwalzenschulter 61 gebildet ist. Die Schaltwalzenschultern 61 können für einen axialen Formschluss an den Schaltwalzenöffnungen 51 des Käfigs 30 anschlagen.

Der Schaltwalzenkörper 58 besitzt einen nicht weiter referenzierten Mantel, in den eine Schaltnut 62 eingeformt ist. Um eine Gabel 46 durch Drehen der Schaltwalze 50 um die Rotationsachse 8 axial bewegen zu können, muss die Schaltnut 62 im Bereich der zu schaltenden Gabel umfänglich um die Rotationsachse 8 verlaufend gelegt und mit einem Neigungswinkel 64 von größer als 0° und kleiner als 90° verlaufend ausgebildet sein. Dabei können zum Bewegen jeder Gabel 46 individuell einzelne Schaltnuten 62 im Schaltwalzenkörper 58 ausgebildet sein. Die in Fig. 4 gezeigte gemeinsame Schaltnut 62 ist lediglich ein bevorzugtes Ausführungsbeispiel. Ferner kann die Schaltnut 62 in nicht gezeigter Weise offen mit einem nicht gezeigten Anfang und einem nicht gezeigten Ende in den Schaltwalzenkörper 58, beispielsweise spiralförmig eingeformt sein. Die in Fig. 4 gezeigte geschlossene Ausführung der Schaltnut 62 mit einem grundsätzlich elliptischen Verlauf ist lediglich ein bevorzugtes Ausführungsbeispiel. Dies hat allerdings den entscheidenden Vorteil, dass sich die Schaltnut hinterschnittfrei herstellen und an einer in Fig. 4 angedeuteten Trennlinie 66 in ein Schaltnutoberteil und Schaltnutunterteil trennen lässt, an der sich zwei Spritzgussformen zusammenführen lassen.

Der aus den beiden Käfigteilen 36, 38 aufgebaute Käfig 30 hält die Schaltwalze 50 an den Schaltwalzenzapfen 60 in den Schaltwalzenöffnungen 51 im Käfiginnenraum 48, was bereits im Zusammenhang mit Fig. 1 und 2 erläutert wurde. Auf diese Weise ist zwischen der Schaltwalze und der Mantelfläche 34 des Käfigs 30 ein nicht weiter referenzierter Führungsraum geschaffen, in dem sich die Schlitten 42 axial in und entgegen der Längsrichtung 2 führen lassen. Hierzu weißt jeder Schlitten 42 von der Rotationsachse 8 aus gesehen an seiner Unterseite eine Auflagefläche 66 auf, die in einem rechtwinklig zur Rotationsachse 8 verlaufenden Querschnitt durch den jeweiligen Schlitten 42 kreissegmentförmig ausgebildet ist. Das Kreissegment weist einen Radius auf, der gleich dem Radius des Schaltwalzenkörpers 58 ist. Auf diese Weise ist der Schlitten weitestgehend toleranzfrei auf dem Schaltwalzenkörper 58 geführt.

Ferner weist jeder Schlitten 42 optional an seinen in der Umfangsrichtung 17 gesehenen Seiten je ein Schlittenformschlusselement 68 auf, das in der Ausführung der Fig. 4 als halbrunder Stab ausgeführt und am nicht weiter referenzierten Schlittengrundkörper gehalten ist. Zur Führung der Schlittenformschlusselemente 68 weist der Käfig 30 entsprechende Schlittenführungselemente 70 auf, in die sich die Schlittenformschlusselemente 68 einsetzen lassen, so dass der Schlitten in der Längsrichtung 2 geführt hin- und herfahren lässt. Von diesen Schlittenführungselementen 70 sind in der Perspektive der Fig. 4 nicht alle im Käfig 30 vorhandenen zu sehen.

Zur weiteren Verbesserung der Führung der Schlitten 42 in und entgegen der Längsrichtung können auf den Schlitten 42 Vorsprünge 72 ausgebildet sein, die sich in und entgegen der Umfangsrichtung 17 formschlüssig in die Schlitze 40 einsetzen lassen. Die Vorsprünge 72 sollten zumindest im Bereich des Kontaktes mit den Wänden ihres jeweiligen Schlitzes 40 kreisförmig oder elliptisch ausgebildet sein, um eine Kontaktreibung zu minimieren.

Die schlitzförmigen Einstecköffnungen 44 durch die Schlitten 42 verändern sich in ihrem Querschnitt und besitzen so Auflageschultern 74, von denen in der Perspektive der Fig. 4 nur zwei zu sehen sind. Auf diese Auflageschultern 74 lassen sich an den Gabeln 46 gehaltene Auflageelemente 76 auflegen, zwischen denen ein Führungsdorn 78 in jeder Gabel 46 gehalten ist. An jeden Führungsdorn 78 schließen sich je zwei Gabelbeine 80 an.

Zum Zusammenbau des Käfigs 30 besitzen die beiden Käfigteile 36, 38 je vier Rasthaken 82 mit je einer nicht weiter referenzierten Hakenformschlussfläche, die zur Deckfläche 32 des jeweiligen Käfigteils 36, 38 gerichtet ist. Dabei sind am zweiten Käfigteil 38 die Rasthaken 82 in je einer Kehle 84 gehalten, die sich in der Längsrichtung 2 über die gesamte Länge des zweiten Käfigteils 38 erstrecken. Die Kehlen 84 öffnen die Hakenformschlussflächen der Rasthaken 82 am zweiten Käfigteil 38 in der Längsrichtung, so dass sich das zweite Käfigteil 38 zusammen mit den Rasthaken 82 ohne Schieber mit einem Urformverfahren wie Spritzgussgießen fertigen lässt.

Zum Zusammensetzen der Vorrichtung 10 aus den in Fig. 4 gezeigten Einzelteilen werden zunächst die Schlitten 42 mit ihren Schlittenformschlusselemente 68 in die Schlittenführungselemente 70 am zweiten Käfigteil 38 eingesetzt. Anschließend wird in den Durchgang, den die Auflageflächen 66 der Schlitten 42 bilden, der Schaltwalzenkörper 58 mit einem der Schaltwalzenzapfen 60 voran eingeführt, wobei der eingeführte Schaltwalzenzapfen 60 durch die Schaltwalzenöffnung 51 am zweiten Käfigteil 38 hindurch nach außen geführt wird. Abschließend wird das erste Käfigteil 36 auf das zweite Käfigteil 38 in der Längsrichtung 2 aufgesetzt und die Rasthaken 82 miteinander verhakt. Nun können die Schaltgabeln 46 mit ihren Führungsdornen 78 in die schlitzförmigen Einstecköffnungen 44 eingesetzt werden. Dabei ist darauf zu achten, dass jeder eingesetzte Führungsdorn 78 in der Schaltnut 62 endet, um die oben genannte Schaltfunktion sicherzustellen.

### Bezugszeichenliste

| | | | |
|---|---|---|---|
| 2 | Längsrichtung | 46 | Gabel |
| 4 | Querrichtung | 48 | Käfiginnenraum |
| 6 | Höhenrichtung | 50 | Schaltwalze |
| 8 | Rotationsachse | 51 | Schaltwalzenöffnung |
| 10 | Vorrichtung | 52 | Einstecköffnung |
| 12 | Getriebeelement | 54 | lineare Bewegungsrichtung |
| 14 | Zahnradgetriebe | 56 | Einführrichtung |
| 16 | Zahnrad | 58 | Schaltwalzenkörper |
| 17 | Umfangsrichtung | 60 | Schaltwalzenzapfen |
| 18 | Welle | 61 | Schaltwalzenschulter |
| 20 | Formschlusselement | 62 | Schaltnut |
| 22 | Ring | 64 | Neigungswinkel |
| 24 | Schlitz | 66 | Auflagefläche |
| 26 | Kuppelelement | 68 | Schlittenformschlusselement |
| 28 | Wand | 70 | Schlittenführungselement |
| 30 | Käfig | 72 | Vorsprung |
| 32 | Deckfläche | 74 | Auflageschulter |
| 34 | Mantel | 76 | Auflageelement |
| 36 | Käfigteil | 78 | Führungsdorn |
| 38 | Käfigteil | 80 | Gabelbein |
| 40 | Schlitz | 82 | Rasthaken |
| 42 | Schlitten | 84 | Kehle |
| 44 | Einstecköffnung | | |

## Patentansprüche

1. Vorrichtung (10) zur axialen Bewegung eines Getriebeelementes (12), umfassend:
- eine drehbar um eine Rotationsachse (8) gelagerte Schaltwalze (50) mit einer zumindest teilweise umfänglich um die Rotationsachse (8) in ihren Außenmantel eingeformte Schaltnut (62), die wenigstens bereichsweise axial geneigt (64) ist,
- einen die Schaltwalze (50) haltenden Käfig (30) mit einer einen Käfiginnenraum (48) gegen einen Käfigaußenraum abgrenzenden Käfigwand (34) und einem axial durch die Käfigwand (34) verlaufenden Wandschlitz (70), welcher den Käfiginnenraum (48) zum Käfigaußenraum hin öffnet,
- einen zwischen der Schaltwalze (50) und der Käfigwand (34) im Bereich des Wandschlitzes (70) axial beweglich gehaltenen Schlitten (42), und
- eine Schaltgabel (46) mit zwei Gabelbeinen (80), zwischen denen das Getriebeelement (12) zur axialen Bewegung in axialer Richtung (2) formschlüssig aufnehmbar ist und einem sich an die Gabelbeine (80) anschließenden Führungsdorn (78), der durch den Wandschlitz (70) und den Schlitten (42) geführt in die Schaltnut (62) eingesetzt ist,
**dadurch gekennzeichnet dass** die Schaltnut (62) mit einer geschlossenen Kurve in die Schaltwalze (50) eingeformt ist.

2. Vorrichtung (10) nach Anspruch 1, wobei die Schaltnut (62) elliptisch in die Schaltwalze (50) eingeformt ist.

3. Vorrichtung (10) nach Anspruch 1 oder 2, wobei die axialen Enden (60) der Schaltwalze (50) durch den Käfig (30) zum Käfigaußenraum geführt sind, wobei in wenigstens eines der axiales Enden (60) in Umfangsrichtung um die Rotationsachse formschlüssig (20) eine Antriebswelle (18) zum Drehen der Schaltwalze (50) einführbar ist.

4. Vorrichtung (10) nach Anspruch 3, wobei die Schaltwalze (50) im Bereich ihrer axialen Enden (60) in und entgegen der axialen Richtung (2) formschlüssig (61) im Käfig (30) gehalten ist.

5. Vorrichtung (10) nach einem der vorstehenden Ansprüche, wobei der Käfig (30) aus wenigstens einem ersten Käfigteil (36) und einem zweiten Käfigteil (38) aufgebaut ist, die in axialer Richtung (2) trennbar sind.

6. Vorrichtung (10) nach Anspruch 5, wobei die beiden Käfigteile (36, 38) mit einem in axialer Richtung (2) wirkenden Käfigformschluss (82) miteinander verbunden sind.

7. Vorrichtung (10) nach Anspruch 6, wobei der Käfigformschluss (82) Rasthaken umfasst.

8. Vorrichtung (10) nach einem der vorstehenden Ansprüche, wobei der Schlitten (42) mit einem in Umfangsrichtung (17) um die Rotationsachse (8) wirkenden Schlittenformschluss (72) im Schlitz (40) in der axialen Richtung (2) geführt ist.

9. Vorrichtung (10) nach einem der vorstehenden Ansprüche, wobei der Schlitten (40) an seiner zur Schaltwalze (50) gerichteten Seite eine im Querschnitt kreissegmentförmige Aussparung (66) aufweist, in die die Schaltwalze (50) eingelegt ist.

10. Vorrichtung (10) nach Anspruch 9, wobei der Schlitten (42) an seinem in der axialen Richtung (2) gesehenen linken und rechten Ende im Käfig (30) in der axialen Richtung (2) geführt (68, 70) gehalten ist.

## Claims

1. Device (10) for the axial movement of a transmission element (12), comprising:
• a shift drum (50) rotatably mounted about a rotational axis (8) with a shift groove (62) formed at least partially circumferentially around the rotational axis (8) in its outer surface, the groove being at least partially inclined in the axial direction (64),
• a cage (30) holding the shift drum (50), with a cage wall (34) separating a cage interior (48) from a cage exterior, and a wall slot (70) extending axially through the cage wall (34), which opens the cage interior (48) to the cage exterior,
• a carriage (42) held axially movable between the shift drum (50) and the cage wall (34) in the area of the wall slot (70), and
• a shift fork (46) with two fork legs (80), between which the transmission element (12) is form-fittingly receivable for axial movement in the axial direction (2), and a guide pin (78) adjoining the fork legs (80), which is guided through the wall slot (70) and the carriage (42) and inserted into the shift groove (62),
**characterized in that** the shift groove (62) is formed in the shift drum (50) as a closed curve.

2. Device (10) according to claim 1, wherein the shift groove (62) is formed elliptically in the shift drum (50).

3. Device (10) according to claim 1 or 2, wherein the axial ends (60) of the shift drum (50) are guided through the cage (30) to the cage exterior, and wherein a drive shaft (18) is insertable into at least one of the axial ends (60), in a form-fitting manner (20) around the rotational axis, to rotate the shift drum (50).

4. Device (10) according to claim 3, wherein the shift drum (50) is held form-fittingly (61) in and against the axial direction (2) in the cage (30) in the region of its axial ends (60).

5. Device (10) according to any of the preceding claims, wherein the cage (30) is composed of at least a first cage part (36) and a second cage part (38), which are separable in the axial direction (2).

6. Device (10) according to claim 5, wherein the two cage parts (36, 38) are connected to one another by a form-fitting cage connection (82) acting in the axial direction (2).

7. Device (10) according to claim 6, wherein the form-fitting cage connection (82) comprises snap hooks.

8. Device (10) according to any of the preceding claims, wherein the carriage (42) is guided in the axial direction (2) in the slot (40) by a form-fitting carriage connection (72) acting in the circumferential direction (17) about the rotational axis (8).

9. Device (10) according to any of the preceding claims, wherein the carriage (40) has on its side facing the shift drum (50) a recess (66) that is circular-segment-shaped in cross-section, into which the shift drum (50) is placed.

10. Device (10) according to claim 9, wherein the carriage (42) is held in the axial direction (2) at its left and right ends (as seen in the axial direction (2)) in the cage (30) in a guided manner (68, 70).

## Revendications

1. Dispositif (10) pour le mouvement axial d'un élément de transmission (12), comprenant :
• un tambour de changement de vitesse (50) monté rotatif autour d'un axe de rotation (8) avec une rainure de changement de vitesse (62) formée au moins partiellement de manière circonférentielle autour de l'axe de rotation (8) dans son enveloppe extérieure, la rainure étant au moins partiellement inclinée axialement (64),
• une cage (30) maintenant le tambour de changement de vitesse (50), avec une paroi de cage (34) délimitant un espace intérieur de cage (48) par rapport à un espace extérieur, et une fente de paroi (70) s'étendant axialement à travers la paroi de la cage (34), ouvrant l'espace intérieur (48) vers l'extérieur de la cage,
• un chariot (42) maintenu mobile axialement entre le tambour de changement de vitesse (50) et la paroi de la cage (34) dans la zone de la fente de paroi (70), et
• une fourche de changement de vitesse (46) avec deux bras de fourche (80), entre lesquels l'élément de transmission (12) est logé de manière solidaire en vue d'un déplacement axial dans la direction axiale (2), ainsi qu'un doigt de guidage (78) prolongé à partir des bras de fourche (80), guidé à travers la fente de paroi (70) et le chariot (42), et inséré dans la rainure de changement de vitesse (62),
**caractérisé en ce que** la rainure de changement de vitesse (62) est formée dans le tambour (50) selon une courbe fermée.

2. Dispositif (10) selon la revendication 1, dans lequel la rainure de changement de vitesse (62) est formée de manière elliptique dans le tambour (50).

3. Dispositif (10) selon la revendication 1 ou 2, dans lequel les extrémités axiales (60) du tambour de changement de vitesse (50) sont guidées à travers la cage (30) vers l'extérieur, et dans lequel un arbre d'entraînement (18) est insérable dans au moins une des extrémités axiales (60), de manière solidaire en rotation (20) autour de l'axe de rotation, pour entraîner le tambour (50).

4. Dispositif (10) selon la revendication 3, dans lequel le tambour (50) est maintenu de manière solidaire (61) dans et contre la direction axiale (2) dans la cage (30), au niveau de ses extrémités axiales (60).

5. Dispositif (10) selon l'une des revendications précédentes, dans lequel la cage (30) est composée d'au moins une première partie de cage (36) et une seconde partie de cage (38), séparables dans la direction axiale (2).

6. Dispositif (10) selon la revendication 5, dans lequel les deux parties de cage (36, 38) sont reliées entre elles par un verrouillage de forme (82) agissant dans la direction axiale (2).

7. Dispositif (10) selon la revendication 6, dans lequel le verrouillage de forme (82) comprend des crochets à ressort.

8. Dispositif (10) selon l'une des revendications précédentes, dans lequel le chariot (42) est guidé dans la direction axiale (2) dans la fente (40) par un verrouillage de forme (72) agissant dans la direction circonférentielle (17) autour de l'axe de rotation (8).

9. Dispositif (10) selon l'une des revendications précédentes, dans lequel le chariot (40) présente, sur son côté orienté vers le tambour (50), un évidement (66) en forme de segment de cercle en coupe transversale, dans lequel le tambour (50) est logé.

10. Dispositif (10) selon la revendication 9, dans lequel le chariot (42) est maintenu guidé dans la direction axiale (2) à ses extrémités gauche et droite (vu dans la direction axiale (2)) dans la cage (30) (68, 70).
